# EUROPEAN PATENT SPECIFICATION

(11) **EP 2 242 385 B1**
(45) Date of publication and mention of the grant of the patent: **12.12.2012**
(21) Application number: 09702443.4
(22) Date of filing: 16.01.2009
(51) Int. Cl.: A41D 31/02

(54) **COMPOSITE FABRICS**
VERBUNDGEWEBE
TISSUS COMPOSITES

(30) Priority: 18.01.2008 US 22109; 28.07.2008 US 137210
(43) Date of publication of application: 27.10.2010
(73) Proprietor: MMI-IPCO, LLC, Lawrence, MA 01842 (US)
(72) Inventor: ROCK, Moshe, Brookline Massachusetts 02446 (US); VAINER, Gadalia, Melrose Massachusetts 02176 (US); LUMB, Douglas, Methuen Massachusetts 01844 (US); ZEIBA, James, Derry New Hampshire 03038 (US); FLAVIN, Shawn, Sandown New Hampshire 03873 (US)
(74) Representative: Clark, Jane Anne
(86) International application number: PCT/US2009/031201
(87) International publication number: WO 2009/091947

(56) References cited:
- EP-A- 1 645 201
- WO-A-2008/057419
- US-A- 5 821 178
- US-A- 6 018 819
- US-A1- 2004 176 009
- US-A1- 2007 281 567

## Description

### TECHNICAL FIELD

This disclosure relates to composite fabrics, and in particular to garments formed of composite fabrics.

### BACKGROUND

Composite fabric articles are achieved by joining together one or more materials in a fabric body for the purpose of attaining desirable properties that cannot be attained by the fabric body or the individual materials alone. Laminated composites, e.g., those having multiple layers joined, e.g., by an adhesive, are sometimes formed for increasing thermal resistance performance of a composite fabric body.

Composite fabrics can be designed for wind and/or liquid water resistance. Composite fabrics of this type typically include a barrier membrane adhered to one fabric layer, or adhered or placed between fabric layers. The barrier membrane of such composite fabrics may be constructed to resist, or substantially impede, passage of air and wind through the fabric layers. However, this type of construction can make it difficult for water vapor to escape outwardly through the barrier, causing liquid to build up on the wearer's skin, with resulting discomfort, in particular during exercise or other physical exertion.

Other composite fabrics are designed to enhance water vapor permeability and airflow in order to improve comfort level for the wearer during physical activity. These fabrics, however, are typically poor insulators, and, as a result, during static physical conditions, i.e. when at or near rest, the wearer may experience discomfort due to flow of cool air through the fabric.

Patent publication no. EP 1645201 discloses a hybrid composite fabric garment comprising first and second fabric portions of differing air permeability.

WO 2008/057419 discloses the use of a nanofiber barrer layer in a composite fabric, and is state of the art according to Article 54(3) EPC.

### SUMMARY

According to one aspect, a hybrid composite fabric garment, comprising:
a first fabric portion comprising: a first inner fabric layer; a first outer fabric layer; and a first barrier layer disposed between the first inner fabric layer and the first outer fabric layer, said first barrier layer comprising a first membrane and having a first predetermined air permeability; and a second fabric portion comprising: a second inner fabric layer; a second outer fabric layer; and a second barrier layer disposed between the second inner fabric layer and the second outer fabric layer and comprising a second membrane, wherein the second barrier layer has a second predetermined air permeability substantially greater than the first predetermined air permeability wherein the first and second membranes are nonwoven membranes and wherein at least one of first and second nonwoven membranes comprises an electrospun nanofiber membrane.

Implementations of this aspect may include one or more of the following additional features. The first predetermined air permeability is between about 0m³/m²/min (0 ft³/ft²/min) and about 0.6096m³/m²/min (2 ft³/ft²/min), under a pressure difference of 12.7mm (½ inch) of water across the first barrier layer (tested according to ASTM D-737). The first nanofiber membrane has a weight of between about 4 grams per square meter and about 7 grams per square meter. The first nanofiber membrane has a thickness of between about 1 micrometer and about 50 micrometers. The first fabric portion has a water resistance of between about 6,000 mm of water and about 15,000 mm of water (tested according to AATCC 127-2003, option 2). The first fabric portion has a moisture vapor transmission rate of between about 2,000 g/m²/24 hrs and about 6,000 g/m²/24 hrs (tested according to ASTM E96 inverted cup). The first fabric portion has an air permeability of between about 0m³/m²/min (0 ft³/ft²/min) and about 0.6096m³/m²/min (2 ft³/ft²/min), under a pressure difference of 12.7mm (½ inch) of water across the first fabric portion (tested according to ASTM D-737). In some cases, at least one of the first and second nanofiber membranes has good stretch and recovery. In some examples, at least one of the first and second nanofiber membranes has low stretch or no stretch. The nanofibers have fiber diameters in the range of between about 50 nanometers and about 1000 nanometers. The nanofibers include polymer fibers (e.g., nylon fibers, polyurethane fibers, etc.). The first barrier layer is bonded to at least one of the first inner fabric layer and the first outer fabric layer with an adhesive. The adhesive is applied in a manner to substantially avoid restriction of moisture vapor transmission through the first barrier layer. The adhesive is applied in a dot coating pattern. The second predetermined air permeability is between about 0.9144m³/m²/min (3 ft³/ft²/min) and about 6.0961m³/m²/min (20 ft³/ft²/min), under a pressure difference of 12.7mm (½ inch) of water across the second barrier layer (tested according to ASTM D-737). The second nanofiber membrane has a thickness of between about 1 micrometer and about 50 micrometers.

The second nanofiber membrane has a weight of between about 2 grams per square meter and about 4 grams per square meter. The second barrier layer is bonded to at least one of the second inner fabric layer and the second outer fabric layer with an adhesive. The adhesive is applied in a manner to substantially avoid restriction of moisture vapor transmission through the second barrier layer. The adhesive is applied in a dot coating pattern. The second fabric portion has a water resistance of between about 500 mm of water and about 4,000 mm of water (tested according to AATCC 127-2003 option 2). The second fabric portion has a moisture vapor transmission rate of between about 6,000 g/m²/24 hrs and about 12,000 g/m²/24 hrs (tested according to ASTM E96 inverted cup). The second fabric portion has an air permeability of between about 0.9144m³/m²/min (3 ft³/ft²/min) and about 6.0961m³/m²/min (20 ft³/ft²/min), under a pressure difference of 12.7mm (½ inch) of water across the second fabric portion (tested according to ASTM D-737). At least one of the first outer fabric layer and the second outer fabric layer includes a woven construction. At least one of the first outer fabric layer and the second outer fabric layer includes a knit construction (e.g., single jersey, plated single jersey, double knit, tricot, and terry sinker loop). At least one of the first inner fabric layer and the second inner fabric layer includes a woven construction. At least one of the first inner fabric layer and the second inner fabric layer includes a knit construction (e.g., single jersey, plated single jersey, double knit, tricot, and terry sinker loop). The knit construction includes a raised surface or a brushed surface arranged to face towards a wearer's body during use. At least one of the first outer fabric layer and the second outer fabric layer has at least one-way stretch. At least one of the first outer fabric layer and the second outer fabric layer includes spandex yarn. At least one of the first inner fabric layer and the second inner fabric layer includes spandex yarn. At least one of the first outer fabric layer and the second outer fabric layer includes low stretch or no stretch fabric. The first fabric portion is disposed in one or more first regions of the fabric garment more likely to be exposed to wind and rain during use. The first fabric portion is configured to cover an upper torso region of a wearer's body (e.g., at least a wearer's shoulder regions, upper back region, and/or upper regions of the front of the garments, e.g., upper chest region). In some cases, the first fabric portion is configured to cover a substantial portion of a wearer's back, e.g., the whole back. The second fabric portion is disposed in one more second regions of the fabric

garment less likely to be exposed to wind and rain during use. The second fabric portion is configured to cover a lower torso region of a wearer's body (e.g., at least a wearer's lower chest region and below). At least one of the first outer fabric layer and the second outer fabric layer is treated with a durable water repellent. At least one of the first inner fabric layer and the second inner fabric layer includes a moisture wicking fabric. At least one of the first inner fabric later and the second inner fabric layer is formed from a material that is rendered hydrophilic to permit wicking of moisture. At least one of the first and second outer layers is chemically treated for enhanced water repellence and/or for enhanced abrasion resistance. At least one of the first and second fabric portions includes one or more seams which are sealed and/or taped to enhance water resistance. At least one of the first fabric portion and the second fabric portion includes flame retardant fibers or a flame retardant fiber blend. At least one of the first inner fabric layer, the first outer fabric layer, the second inner fabric layer, and the second outer fabric layer includes flame retardant fibers or a flame retardant fiber blend.

In another aspect, a hybrid composite fabric garment includes a first fabric portion and a second fabric portion. The first fabric portion is water repellent, wind resistant, and permits moisture vapor transmission. The first fabric portion includes a first nanofiber membrane. The second fabric portion is less water repellent, less wind resistant, and permits greater moisture vapor transmission than the first nanofiber membrane. The second fabric portion includes a second nanofiber membrane;

Implementations of this aspect may include one or more of the following additional features. The first nanofiber membrane includes a nonwoven web having a weight of between about 4 grams per square meter and about 7 grams per square meter. The first nanofiber membrane has an air permeability of between about 0m³/m²/min (0 ft³/ft²/min) and about 0.6096m³/m²/min (2 ft³/ft²/min), under a pressure difference of 12.7mm (½ inch) of water across the first nanofiber membrane (tested according to ASTM D-737). The first fabric portion has a water resistance of between about 6,000 mm of water and about 15,000 mm of water (tested according to AATCC 127-2003 option 2). The first fabric portion has a moisture vapor transmission rate of between about 2,000 g/m²/24 hrs and about 6,000 g/m²/24 hrs (tested according to ASTM E96 inverted cup). The first fabric portion has an air permeability of between about 0m³/m²/min (0 ft³/ft²/min) and about 0.6096m³/m²/min (2 ft³/ft²/min), under a pressure difference of 12.7mm (½ inch) of water across the first fabric portion (tested according to ASTM D-737). The second nanofiber membrane includes a nonwoven web having a weight of between about 2 grams per square meter and about 4 grams per square meter. The second nanofiber membrane has an air permeability of between about 0.9144m³/m²/min (3 ft³/ft²/min) and about 6.0961m³/m²/min (20 ft³/ft²/min), under a pressure difference of 12.7mm (½ inch) of water across the second nanofiber membrane (tested according to ASTM D-737). The second fabric portion has a water resistance of between about 500 mm of water and about 4,000 mm of water (tested according to AATCC 127-2003 option 2). The second fabric portion has a moisture vapor transmission rate of between about 6,000 g/m²/24 hrs and about 12,000 g/m²/24 hrs (tested according to ASTM E96 inverted cup). The second fabric portion has an air permeability of between about 0.9144m³/m²/min (3 ft³/ft²/min) and about 6.0961m³/m²/min (20 ft³/ft²/min), under a pressure difference of 12.7mm (½ inch) of water across the second fabric portion (tested according to ASTM D-737). At least one of the first and second nanofiber membranes includes an electrospun nanofiber membrane. At least one of the first and second nanofiber membranes has a thickness of between about 1 micrometer and about 50 micrometers. At least one of the first and second nanofiber membranes has good stretch and recovery. At least one of the first and second nanofiber membranes has low stretch or no stretch. At least one of the first and second nanofiber membranes includes a nonwoven web formed from a plurality of nanofibers. The nanofibers have fiber diameters in the range of between about 50 nanometers and about 1000 nanometers. The nanofibers include polymer fibers (e.g., nylon fibers, polyurethane fibers, etc.). The first fabric portion includes a first laminate including a first outer fabric layer, and a first inner fabric layer, and the first nanofiber membrane is disposed between the first inner and the first outer fabric layers and is bonded to at least one of the first inner and the first outer fabric layers. The first inner fabric layer includes a raised or brushed surface facing inwardly, away from the first nanofiber membrane. The first nanofiber membrane is bonded to at least one of the first inner and the first outer fabric layers with an adhesive. The adhesive is applied in a manner to substantially avoid restriction of moisture vapor transmission through the first nanofiber membrane. The second fabric portion includes a second laminate including a second outer fabric layer, and a second inner fabric layer, and the second nanofiber membrane is disposed between the second inner and the second outer fabric layers and is bonded to at least one of the second inner and the second outer fabric layers. The second nanofiber membrane is bonded to at least one of the second inner and the second outer fabric layers with an adhesive, and the adhesive is applied in a manner to substantially avoid restriction of moisture vapor transmission through the second nanofiber membrane. The second inner fabric layer includes a raised or brushed surface facing inwardly, away from the second nanofiber membrane. At least one of the first outer fabric layer and the second outer fabric layer includes a woven construction. At least one of the first outer fabric layer and the second outer fabric layer is treated with a durable water repellent. The first outer fabric layer and the second outer fabric layer have the same construction. At least one of the first outer fabric layer and the second outer fabric layer has stretch, e.g., at least one-way stretch. At least one of the first outer fabric layer and the second outer fabric layer includes spandex yarn. At least one of the first inner fabric layer and the second inner fabric layer includes spandex yarn. At least one of the first inner fabric layer and the second inner fabric layer has a construction selected from woven construction; single jersey knit construction, plated single jersey knit construction, double knit construction, tricot knit construction, and terry sinker loop construction. At least one of the first inner fabric layer and the second inner fabric layer includes a moisture wicking fabric. At least one of the first inner fabric later and the second inner fabric layer is formed from a material that is rendered hydrophilic to permit wicking of moisture. At least one of the first and second inner fabric layers includes a raised surface facing inwardly, towards a wearer's body during use. At least one of the first and second inner fabric layers includes a brushed surface facing inwardly, towards a wearer's body during use. The second fabric portion includes a laminate including an outer fabric layer, and an inner fabric layer, and the second nanofiber membrane is disposed between the inner and outer fabric layers and is bonded to at least one of the inner and outer fabric layers with an adhesive. At least one of the first and second outer layers is chemically treated for enhanced water repellence and/or for enhanced abrasion resistance. At least one of the first and second fabric portions includes one or more seams which are sealed and/or taped to enhance water resistance. At least one of the first fabric portion and the second fabric portion includes flame retardant fibers. At least one of the first fabric portion and the second fabric portion includes a flame retardant fiber blend. At least one of the first inner fabric layer, the first outer fabric layer, the second inner fabric layer, and the second outer fabric layer includes flame retardant fibers. At least one of the first inner fabric layer, the first outer fabric layer, the second inner fabric layer, and the second outer fabric layer includes a flame retardant fiber blend.

In yet another aspect, a hybrid composite fabric garment includes a first fabric portion and a second fabric portion. The first fabric portion includes a first inner fabric layer, a first outer fabric layer, and a first barrier layer disposed therebetween. The first barrier layer includes a first nonwoven membrane. The first barrier layer has a first predetermined air permeability. The second fabric portion includes a second inner fabric layer, a second outer fabric layer, and a second barrier layer disposed therebetween. The second barrier layer includes a second nonwoven membrane. The second barrier layer has a second predetermined air permeability substantially greater than the first predetermined air permeability.

Implementations of this aspect may include one or more of the following additional features. At least one of first and second nonwoven membranes includes an electrospun membrane. The electrospun membrane is formed of fibers having fiber diameters in the range of between about 50 nanometers and about 1000 nanometers. At least one of the first and second nonwoven membranes includes a melt blown membrane. The melt blown membrane is formed of fibers having fiber diameters in the range of between about 500 nanometers and about 2,000 nanometers. At least one of the first and second barrier layers includes multiple nonwoven membrane layers. At least one of the nonwoven membrane layers includes a melt blown membrane. At least one of the nonwoven membrane layers includes an electrospun membrane. At least one of the nonwoven membrane layers includes an electrospun nanofiber membrane. The nonwoven membrane layers include one or more melt blown membrane layers and one or more electrospun membrane layers. The nonwoven membrane layers include a melt blown membrane layer having an air permeability of between about 3.048m³/m²/min (10 ft³/ft²/min) and about 21.336m³/m²/min (70 ft³/ft²/min), tested according to ASTM D-737 under a pressure difference of 12.7mm (½ inch) of water across the melt blown membrane layer. The nonwoven membrane layers may also include an electrospun membrane layer connected to the melt blown membrane layer and having an air permeability of between about 0.6096m³/m²/min (2 ft³/ft²/min) and about 6.0961m³/m²/min (20 ft³/ft²/min), tested according to ASTM D-737 under a pressure difference of 12.7mm (½ inch) of water across the electrospun membrane layer. The electrospun membrane layer includes a nanofiber membrane. The electrospun membrane layer is bonded to the melt blown membrane layer with an adhesive. The first predetermined air permeability is between about 0m³/m²/min (0 ft³/ft²/min) and about 0.6096m³/m²/min (2 ft³/ft²/min), under a pressure difference of 12.7mm (½ inch) of water across the first barrier layer (tested according to ASTM D-737). The first fabric portion has a water resistance of between about 6,000 mm of water and about 15,000 mm of water (tested according to AATCC 127-2003 option 2).The first fabric portion has a moisture vapor transmission rate of between about 2,000 g/m²/24 hrs and about 6,000 g/m²/24 hrs (tested according to ASTM E96 inverted cup). The second predetermined air permeability is between about 0.9144m³/m²/min (3 ft³/ft²/min) and about 6.0961m³/m²/min (20 ft³/ft²/min), under a pressure difference of 12.7mm (½ inch) of water across the second barrier layer (tested according to ASTM D-737). The second barrier layer is bonded to at least one of the second inner fabric layer and the second outer fabric layer with an adhesive. The first barrier layer is bonded to at least one of the first inner fabric layer and the first outer fabric layer with an adhesive. The second fabric portion has a water resistance of between about 500 mm of water and about 4,000 mm of water (tested according to AATCC 127-2003 option 2). The second fabric portion has a moisture vapor transmission rate of between about 6,000 g/m²/24 hrs and about 12,000 g/m²/24 hrs (tested according to ASTM E96 inverted cup). The second fabric portion has an air permeability of between about 0.9144m³/m²/min (3 ft³/ft²/min) and about 6.0961m³/m²/min (20 ft³/ft²/min), under a pressure difference of 12.7mm (½ inch) of water across the second fabric portion (tested according to ASTM D-737). The first fabric portion is configured to cover an upper torso region of a wearer's body (e.g., at least a wearer's shoulder regions, upper back region, and/or upper regions of the front of the garments, e.g., upper chest region). In some cases, the first fabric portion is configured to cover a substantial portion of a wearer's back, e.g., the whole back. The second fabric portion is disposed in one more second regions of the fabric garment less likely to be exposed to wind and rain during use. The second fabric portion is configured to cover a lower torso region of a wearer's body (e.g., at least a wearer's lower chest region and below).

In another aspect, a composite fabric includes an inner fabric layer, an outer fabric layer, and a barrier layer disposed between the inner fabric layer and the outer fabric layer. The barrier layer includes a nonwoven membrane.

Implementations of this aspect may include one or more of the following additional features. The nonwoven membrane includes an electrospun membrane. The nonwoven membrane includes a melt blown membrane. The barrier layer includes multiple nonwoven membrane layers. At least one of the nonwoven membrane layers includes a melt blown membrane. At least one of the nonwoven membrane layers includes an electrospun membrane. At least one of the nonwoven membrane layers includes an electrospun nanofiber membrane. The nonwoven membrane layers include one or more melt blown membrane layers and one or more electrospun membrane layers. The nonwoven membrane layers include a melt blown membrane layer having an air permeability of between about 3.048m³/m²/min (10 ft³/ft²/min) and about 21.336m³/m²/min (70 ft³/ft²/min), under a pressure difference of 12.7mm (½ inch) of water across the melt blown membrane layer (tested according to ASTM D-737). The nonwoven membrane layers may also include an electrospun membrane layer connected to the melt blown membrane layer and having an air permeability of between about 0.6096m³/m²/min (2 ft³/ft²/min) and about 6.0961m³/m²/min (20 ft³/ft²/min), under a pressure difference of 12.7mm (½ inch) of water across the electrospun membrane layer (tested according to ASTM D-737). The electrospun membrane layer includes a nanofiber membrane. The electrospun membrane layer is bonded to the melt blown membrane layer with an adhesive. The barrier layer has an air permeability of between about 0m³/m²/min (0 ft³/ft²/min) and about 0.6096m³/m²/min (2 ft³/ft²/min), under a pressure difference of 12.7mm (½ inch) of water across the barrier layer (tested according to ASTM D-737). The composite fabric has a water resistance of between about 6,000 mm of water and about 15,000 mm of water (tested according to AATCC 127-2003 option 2). The composite fabric has a moisture vapor transmission rate of between about 2,000 g/m²/24 hrs and about 6,000 g/m²/24 hrs (tested according to ASTM E96 inverted cup). The composite fabric has a second barrier layer having a predetermined air permeability of between about 0.9144m³/m²/min (3 ft³/ft²/min) and about 6.0961m³/m²/min (20 ft³/ft²/min), under a pressure difference of 12.7mm (½ inch) of water across the barrier layer (tested according to ASTM D-737). The barrier layer is bonded to at least one of the inner fabric layer and the outer fabric layer with an adhesive. The composite fabric has a water resistance of between about 500 mm of water and about 4,000 mm of water (tested according to AATCC 127-2003 option 2). The composite fabric has a moisture vapor transmission rate of between about 6,000 g/m²/24 hrs and about 12,000 g/m²/24 hrs (tested according to ASTM E96 inverted cup). The composite fabric has a second barrier layer having an air permeability of between about 0.9144m³/m²/min (3 ft³/ft²/min) and about 6.0961m³/m²/min (20 ft³/ft²/min), under a pressure difference of 12.7mm (½ inch) of water across the composite fabric (tested according to ASTM D-737).

According to another aspect, a method of forming a hybrid composite fabric includes forming a first fabric portion, forming a second fabric portion and joining together the first and second fabric portions to form a hybrid composite fabric garment. Forming the first fabric portion includes disposing a first barrier layer including a first nonwoven membrane having a first predetermined air permeability between a first inner fabric layer and a first outer fabric layer. Forming the second fabric portion includes disposing a second barrier layer including a second nonwoven membrane, having a second predetermined air permeability substantially greater than the first predetermined air permeability, between a second inner fabric layer and a second outer fabric layer.

Implementations of this aspect may include one or more of the following additional features. The method may include forming at least one of the first and second barrier layers. forming at least one of the first and second barrier layers may include stacking multiple nonwoven membranes on top of each other, and mechanically processing the stack of nonwoven membranes. Mechanically processing the stack of nonwoven membranes includes applying pressure to the stack of nonwoven membranes. Pressure is applied by passing the stack of nonwoven membrane through a plurality of rollers. The rollers may be heated. The method may also include disposing an adhesive between the multiple nonwoven membranes. Stacking the multiple nonwoven membranes may include electrospinning a nonwoven membrane onto a carrier nonwoven membrane. The method may also include forming the carrier membrane using a melt blowing operation.

In another aspect, a hybrid composite fabric garment includes a first fabric portion and a second fabric portion. The first fabric portion includes a first inner fabric layer, a first outer fabric layer, and a first barrier layer disposed therebetween. The first barrier layer includes a first membrane. The first membrane has substantially zero air permeability. The second fabric portion includes a second inner fabric layer, a second outer fabric layer, and a second barrier layer disposed therebetween. The second barrier layer includes a nonwoven membrane. The nonwoven membrane of the second barrier layer has an air permeability that is substantially greater than the air permeability of the first membrane.

Implementations of this aspect may include one or more of the following additional features. The first barrier layer has an air permeability of between about 0m³/m²/min (0 ft³/ft²/min) and about 0.6096m³/m²/min (2 ft³/ft²/min), tested according to ASTM D-737 under a pressure difference of 12.7mm (½ inch) of water across the first barrier layer. The first membrane is a film membrane (e.g., a polytetrafluoroethylene film membrane or a polyurethane film membrane). The first membrane is a nonwoven membrane. The first membrane may include one or more melt blown membrane layers. The first membrane may include one or more electrospun membrane layers. The first membrane may include one or more electrospun nanofiber membrane layers. The first membrane may include multiple nonwoven membrane layers. The first membrane may include one or more melt blown membrane layers and one or more electrospun membrane layers. The first membrane comprises multiple melt blown membrane layers. The first membrane may include multiple electrospun membrane layers. The first membrane may include multiple electrospun nanofiber membrane layers. The first membrane may include a first electrospun nanofiber membrane layer formed from nanofibers having a first fiber diameter, and a second electrospun nanofiber membrane layer formed from nanofibers having a second fiber diameter that is finer than the first fiber diameter. The first membrane may include a first electrospun nanofiber membrane layer formed from nanofibers having fiber diameters of about 500 nanometers, and a second electrospun nanofiber membrane layer formed from nanofibers having fiber diameters of about 200 nanometers. The first membrane may include a first electrospun nanofiber membrane layer formed from nanofibers having fiber diameters of about 800 nanometers, and a second electrospun nanofiber membrane layer formed from nanofibers having fiber diameters of about 300 nanometers. The nonwoven membrane of the second barrier layer may include one or more melt blown membrane layers. The nonwoven membrane of the second barrier layer may include one or more electrospun membrane layers. The nonwoven membrane of the second barrier layer may include multiple nonwoven membrane layers. The nonwoven membrane of the second barrier layer includes one or more melt blown membrane layers and one or more electrospun membrane layers. The nonwoven membrane of the second barrier layer may include multiple melt blown membrane layers. The nonwoven membrane of the second barrier layer may include multiple electrospun membrane layers. The nonwoven membrane of the second barrier layer may include multiple electrospun nanofiber membrane layers. The nonwoven membrane of the second barrier layer may include a first electrospun nanofiber membrane layer formed from nanofibers having a first fiber diameter, and a second electrospun nanofiber membrane layer formed from nanofibers having a second fiber diameter that is finer than the first fiber diameter. The second barrier layer has an air permeability of between about 0.9144m³/m²/min (3 ft³/ft²/min) and about 6.0961m³/m²/min (20 ft³/ft²/min), tested according to ASTM D-737 under a pressure difference of 12.7mm (½ inch) of water across the second barrier layer.

The details of one or more embodiments are set forth in the accompanying drawings and the description below. Other features, objects, and advantages will be apparent from the description and drawings, and from the claims.

### DESCRIPTION OF DRAWINGS

FIG 1 is a front view of an example of a hybrid composite fabric garment.
FIG 2 is a cross-sectional view of an example of a fabric laminate for use in a first fabric portion of the hybrid composite fabric garment of FIG 1.
FIG 3 is a cross-sectional view of an example of a fabric laminate for use in a second fabric portion of the hybrid composite fabric garment of FIG 1.
FIG 4A is a magnified plan view of a nonwoven nanofiber membrane.
FIG. 4B is a magnified cross-sectional view of a nonwoven nanofiber membrane.
FIG 5 is a schematic view of an electrospinning process for fabricating a nonwoven nanofiber membrane.
FIG 6 is schematic view of a melt blowing process for fabricating a nonwoven membrane.
FIGS. 7-9 are schematic representations of systems for processing nonwoven membranes for use in composite fabrics.

Like reference symbols in the various drawings indicate like elements.

### DETAILED DESCRIPTION

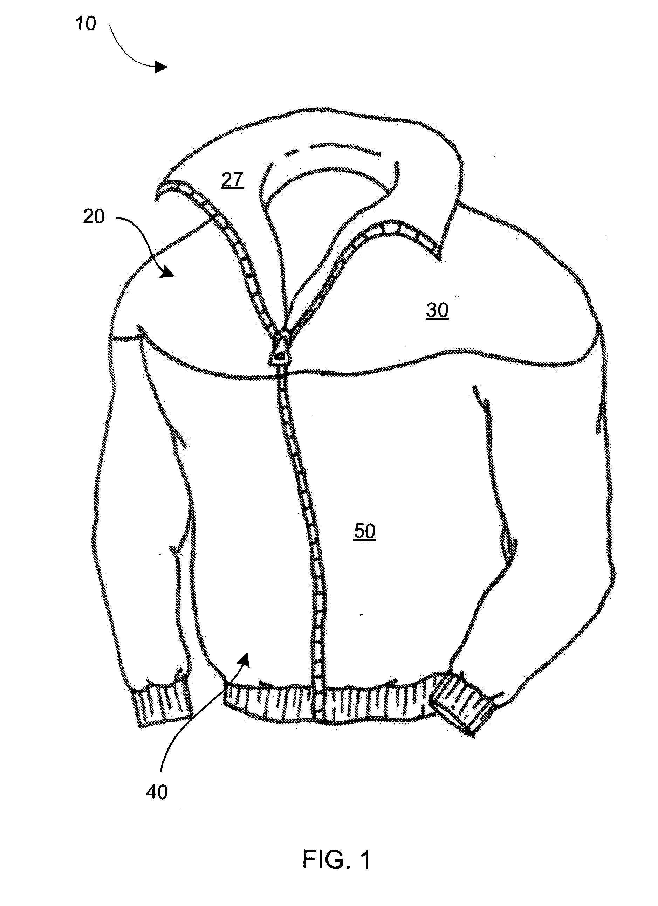

Referring to FIG. 1, a hybrid composite fabric garment 10 in the form of a jacket includes a first fabric portion 20 and a second fabric portion 40. The first fabric portion 20 is formed of a composite fabric (e.g., a laminate) that includes a first outer fabric layer and a first inner fabric layer, with a first barrier layer disposed therebetween. The first barrier layer includes a first membrane, e.g., a film membrane or a nonwoven membrane, e.g., an electrospun nonwoven and/or a melt blown nonwoven membrane. This construction is configured to provide a fabric laminate with high water resistance, e.g., between about 6,000 mm of water and about 15,000 mm of water (tested according to AATCC 127-2003 option 2), and good moisture vapor transmission rate (MVT), e.g., between about 2,000 grams per square meter per 24 hours (g/m²/24 hrs) and about 6,000 grams per square meter per 24 hours (tested according to ASTM E-96, inverted cup). This construction is also configured to provide high resistance to the penetration of wind, with a very low air permeability, e.g., between about 0m³/m²/min (0 ft³/ft²/min) and about 0.6096m³/m²/min (2 ft³/ft²/min) (tested according to ASTM D-737, under a pressure difference of 12.7mm (½ inch) of water across the first fabric portion). The complete disclosures of all the listed test methods, e.g., AATCC 127-2003, ASTM E-96, and ASTM D-737, are incorporated herein by reference.

The second fabric portion 40 is formed of a composite fabric that includes a second fabric outer layer and a second fabric inner layer, with a second barrier layer (e.g., a second membrane, e.g., a nonwoven membrane, e.g., an electrospun nonwoven and/or a melt blown nonwoven membrane) disposed therebetween. The second barrier layer is generally less water repellent, less wind resistant, and permits greater moisture vapor transmission than the nanofiber membrane of the first barrier layer. This construction can be configured to provide a fabric laminate with higher air permeability, e.g., between about 0.9144m³/m²/min (3 ft³/ft²/min) and about 6.0961m³/m²/min (20 ft³/ft²/min) (tested according to ASTM D-737, under pressure difference of 12.7mm (½ inch) of water across the second fabric portion), low to medium water resistance, e.g., between about 500 mm of water and about 4,000 mm of water (tested according to AATCC 127-2003 option 2), and high moisture vapor transmission rate, e.g., between about 6,000 grams per square meter per 24 hours (g/m²/24 hrs) and about 12,000 grams per square meter per 24 hours (tested according to ASTM E-96, inverted cup).

The fabric laminates of the first and second fabric portions 20, 40 are stitched together in a predetermined pattern to form the hybrid composite fabric garment 10. In the embodiment illustrated in FIG. 1, the first fabric portion 20 is configured to cover an upper torso region of a wearer's body, e.g., upper chest and shoulders. The second fabric portion 40 is configured to cover a lower torso region of a wearer's body, e.g., a wearer's lower chest region and below. The seams of the garment may also be sealed to add additional protection against wind and water. For example, a thermoplastic film made of polyurethane can be used to tape the seams. This construction is configured to protect a wearer with a relatively high degree of resistance to liquid water and wind in regions of the garment that are relatively more likely to be exposed to wind and rain, while at the same time still providing for some degree of moisture vapor transmission in those regions. This construction also provides a relatively higher degree of water vapor transmission and air permeability in regions of the garment 10 that are relatively less likely to be exposed to wind and rain, and thus increase the comfort level of the wearer.

### First Fabric Portion

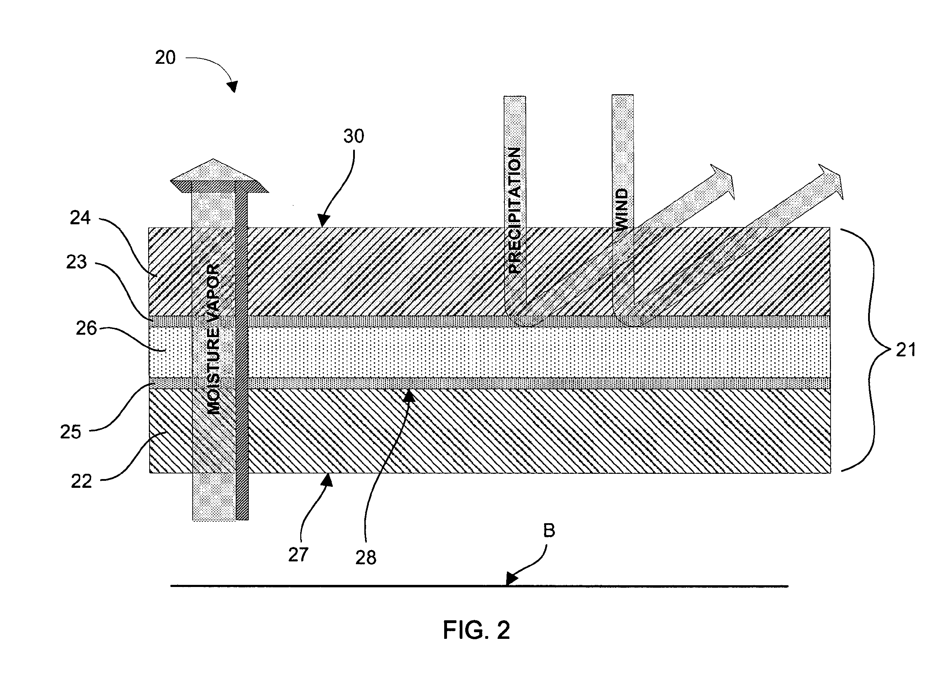

Referring to FIGS. 1 and 2, as mentioned above, the first fabric portion 20 is formed of a first fabric laminate 21 including a first inner fabric layer 22, a first outer fabric layer 24, and a first barrier layer 26, positioned between and bonded to the first inner and first outer fabric layers. Due to the construction of the first fabric laminate 21, the first fabric portion 20 is resistant to penetration by liquid water, e.g., rain, and wind. For example, the first barrier layer 26 may permit only a relatively low volume of air flow, e.g., in the range of between about 0m³/m²/min (0 ft³/ft²/min) and about 0.6096m³/m²/min (2 ft³/ft²/min) (tested according to ASTM D-737, under a pressure difference of 12.7mm (½ inch) of water across the first barrier layer 26) for enhanced thermal insulation performance in windy conditions.

Referring to FIG. 2, the first inner fabric layer 22 has a woven or knit construction (e.g., single jersey knit, plated single jersey knit, double knit, tricot knit, and/or terry sinker loop knit). The first inner fabric layer 22 includes a first surface 27, which faces a wearer's body B during use, and second surface 28, which is bonded to the first barrier layer 26. The first surface 27 can be raised and/or brushed for enhanced user comfort, e.g., softer to touch and enhanced water management.

The first inner fabric layer 22 is designed to wick away moisture, e.g., perspiration, and minimize heat loss. During use, perspiration generated by the user is pulled through the first inner fabric layer 22 and allowed to escape, e.g., as vapor, through the first barrier layer 26 and the first outer fabric layer 24. In some cases, for example, the first inner fabric layer 22 may be formed from a moisture wicking fabric. Alternatively or additionally, the first inner fabric layer 22 may be formed from a material that is rendered hydrophilic to promote wicking of moisture. As a result, liquid moisture, e.g., sweat, is transported away from the wearer's body and toward an outer surface 30 of the garment.

Referring still to FIG. 2, the first outer fabric layer 24 may be a woven material. In some cases, the first outer fabric layer 24 may have stretch in at least one direction, e.g., one-way or two-way stretch. In some examples, the first outer fabric layer 24 may be formed from a low stretch or no stretch fabric. In some cases, the first outer fabric layer 24 is treated with a durable water repellent, thereby inhibiting the transport of liquid water from the outer surface 30 toward an inner surface 27 of the garment 10.

As mentioned above, the first barrier layer 26 is positioned between the first inner and first outer fabric layers 22, 24. The first barrier layer 26 allows water vapor, e.g., a wearer's body humidity, to pass through, but at the same time serves as a liquid barrier that blocks air and liquid water from passing inwardly through the first barrier layer 26 toward the wearer's body B.

The first barrier layer 26 has a weight of between about 4 grams per square meter and about 7 grams per square meter, a thickness of between about 1 micrometer and about 50 micrometers, and an air permeability in the range of between about 0m³/m²/min (0 ft³/ft²/min) and about 0.6096m³/m²/min (2 ft³/ft²/min )(ASTM D-737).

Referring again to FIG. 2, first and second adhesive layers 23, 25 secure the first barrier layer 26 to opposed sides of the first inner fabric layer 22 and the first outer fabric layer 24. The first and second adhesive layers 23, 25 can be applied to the opposed surfaces of the first inner and first outer fabric layers 22, 24 and/or to the first barrier layer 26 before joining the layers together. The first adhesive layer 23 is positioned between the first barrier layer 26 and the first outer fabric layer 24 for adhering the first barrier layer 26 to the first outer fabric layer 24. Similarly, the second adhesive layer 25 is positioned between the first barrier layer 26 and the first inner fabric layer 22 for adhering the first barrier layer 26 to the first inner fabric layer 22. The first and second adhesive layers 23, 25 are applied is such a manner as to avoid restriction of the moisture vapor transmission and/or air permeability of the first barrier layer 26. For example, the first and second adhesive layers 23, 25 can be applied in a dot coating pattern. The first and second adhesive layers 23, 25 can be applied, e.g., with rotary printing and/or gravure rolling.

### Second Fabric Portion

As discussed above, the second fabric portion 40 of the hybrid composite fabric garment 10 is constructed to provide a relatively higher level of air permeability as compared to the first fabric portion 20. The second fabric portion 40 is arranged in regions of the hybrid composite fabric garment 10 that are less likely (relative to the first fabric portion 20) to be exposed, in use, to wind and rain, and are constructed in such a manner as to provide high breathability and air permeability to provide increased comfort for the wearer.

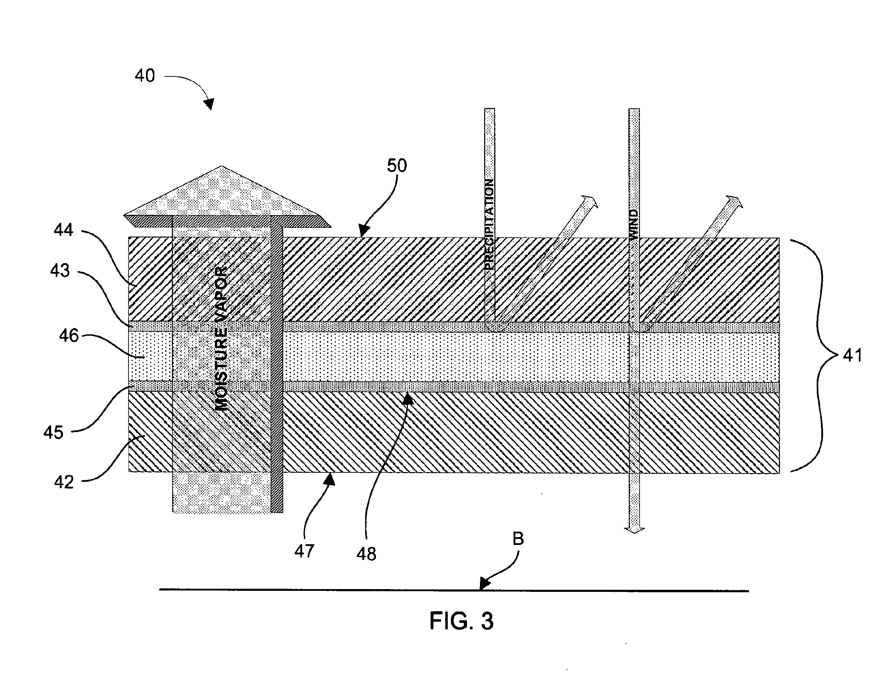

As shown in FIG. 3, and as discussed above, the second fabric portion 40 is formed of a second laminate 41 consisting of a second inner fabric layer 42, a second outer fabric layer 44, and a second barrier layer 46 (e.g., an electrospun membrane and/or a melt blown membrane) disposed therebetween. During use, liquid moisture, e.g., sweat, is absorbed by the second inner fabric layer 42 and transported through the second barrier layer 46 and the second outer fabric layer 44, e.g., in vapor form. Due to the construction of the second fabric portion 40, air (e.g., wind) is also permitted to penetrate through the fabric towards a wearer's body, e.g., for cooling.

The second inner fabric layer 42 is similar to the first inner fabric layer 22, as described above with regard to FIG. 2. In particular, the second inner fabric layer 42 has a woven or knit construction (e.g., single jersey knit, plated single jersey knit, double knit, tricot knit, and/or terry sinker loop knit). The second inner fabric layer 42 includes a first surface 47, which faces a wearer's body B during use, and second surface 48, which is bonded to the second barrier layer 46. The first surface 47 can be raised and/or brushed for enhanced user comfort, e.g., softer to touch and enhanced moisture absorption.

The second inner fabric layer 42 is formed from a moisture wicking fabric and/or a material that is rendered hydrophilic to promote wicking of moisture. As a result, liquid moisture, e.g., sweat, is transported away from the wearer's body and toward the second barrier layer 46.

The second outer fabric layer 44 is similar to the first outer fabric layer 24. The second outer fabric layer 44 is a woven material. As with the first outer fabric layer 24, the second outer fabric layer 44 may also be treated with a durable water repellent to inhibit the movement of liquid water from an outer surface 50 of the second fabric portion 40 toward the inner surface 47 of the garment 10.

The barrier layer 46 of the second fabric portion 40 has a lower water resistance, higher moisture vapor transmission rate and higher air permeability properties than the first barrier layer 26. The second barrier layer 46 has a weight of between about 2 grams per square meter and about 3 grams per square meter, a thickness of between about 1 micrometer and about 50 micrometers, and an air permeability in the range of between about 0.9144m³/m²/min (3 ft³/ft²/min) and about 6.0961m³/m²/min (20 ft³/ft²/min) (ASTM D-737, under a pressure difference of 12.7mm (½ inch) of water across the membrane). Due at least in part to the construction of the second barrier layer 46, air is permitted to penetrate more easily through the second fabric portion 40 for cooling and providing direct evaporation of liquid moisture, e.g., sweat, from the wearer's body.

Referring still to FIG. 3, the second barrier layer 46 is bound to the second inner and second outer fabric layers 42, 44 with first and second adhesive layers 43, 45. The first adhesive layer 43 is positioned between the second barrier layer 46 and the second outer fabric layer 44 for adhering the second barrier layer 46 to the second outer fabric layer 44. Similarly, the second adhesive layer 45 is positioned between the second barrier layer 46 and the second inner fabric layer 42 for adhering the second barrier layer 46 to the second inner fabric layer 42. The adhesive layers 43, 45 of the second fabric portion 40 are applied in a manner to substantially avoid restriction of moisture vapor transmission and/or air permeability of the second barrier layer 46.

### Barrier Layers

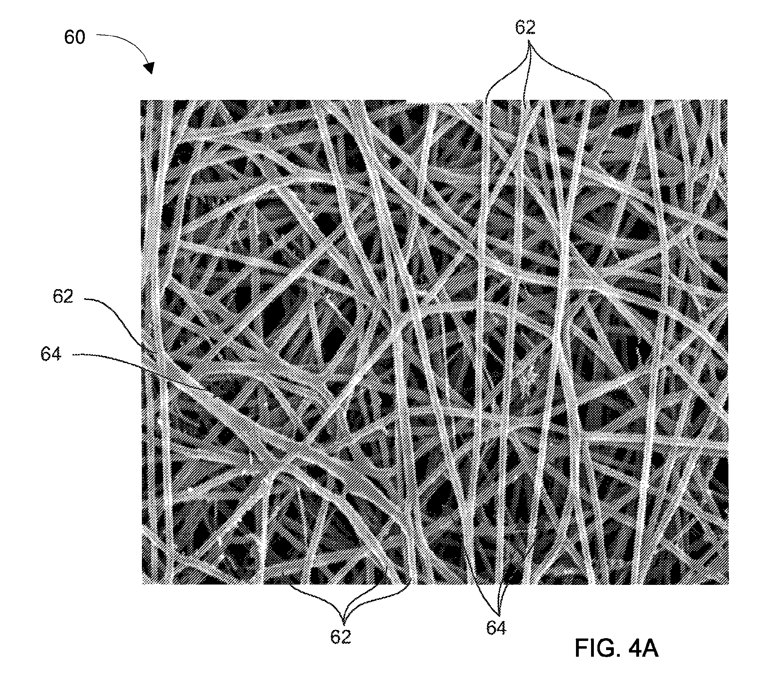

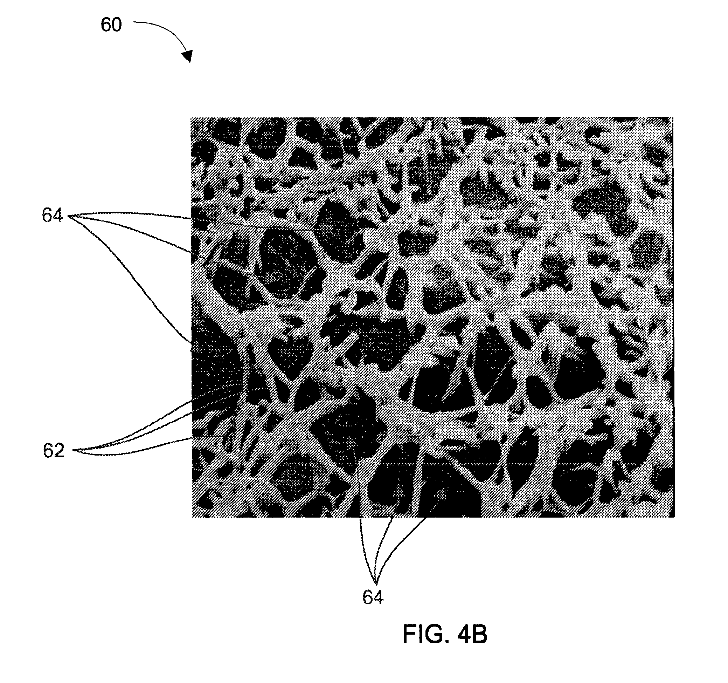

The first and/or second barrier layers 26, 46 can include one or more electrospun membrane layers, e.g., one or more electrospun nanofiber membranes such as those commercially available from Finetex Technology, Inc. of Hudson, New Hampshire. For example, FIGS. 4A and 4B show an electrospun nanofiber membrane 60 that is suitable for use with either or both of the first and second barrier layers 22, 46. As shown in FIGS. 4A and 4B, the electrospun nanofiber membrane 60 includes a plurality of intermingled nanofibers 62 with small pores 64 therebetween. The nanofibers 62 are polymer fibers, e.g., nylon, polyurethane, and/or other synthetic fibers, having fiber diameters in the range of between about 50 nanometers and about 1000 nanometers. It is the fibrous and porous structure that provides the nanofiber membrane with its wind and water resistant and vapor permeable properties. The intricate pores 64 of the membrane 60 are large enough to allow moisture vapor generated by the wearer's body to escape, yet are small enough to prevent the smallest droplets of water from penetrating the membrane and reaching the wearer's body.

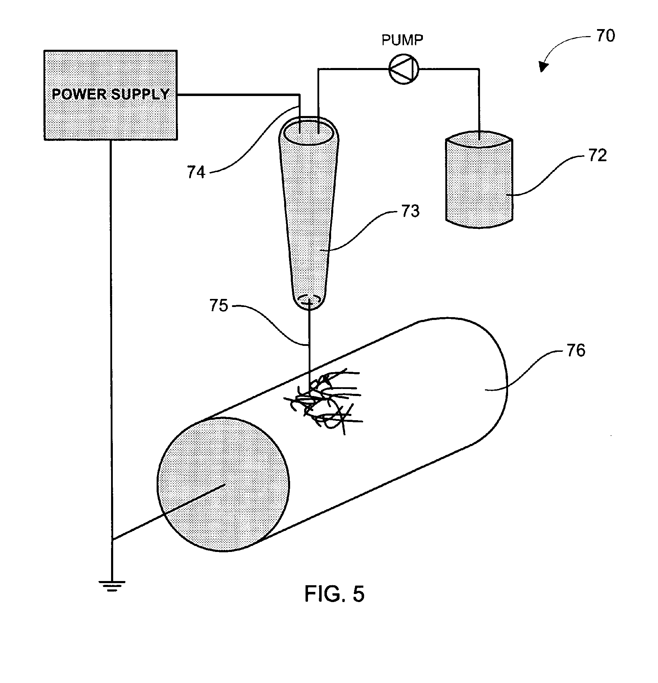

The electrospinning process allows for fine control over the air permeability, water vapor transmission, and water resistance of the nanofiber membrane 60. As illustrated in FIG. 5, in the electrospinning process 70, a polymer solution or melt is pumped from a source 72 to a nanofiber nozzle 73 where a high electrical voltage is applied to the solution or melt (e.g., via a first electrode 74). A jet 75 of the solution or melt is drawn towards a grounded source, e.g., a rotating drum 76, thereby producing a nano sized fiber. Multiple nanofiber nozzles can be run simultaneous to produce a nano-nonwoven membrane. The nanofibers are collected on the rotating drum 76 to produce a continuous nonwoven membrane. Process controls allow for a great deal of command over pore size, thickness, and fiber diameter, thereby allowing for control over air permeability and water repellency properties of the non-woven membrane.

The electrospun nanofiber membranes can have a weight in the range of between about 2 grams per square meter and about 7 grams per square meter, a thickness of between about 1 micrometer and about 50 micrometers, and an air permeability in the range of between about 0m³/m²/min (0 ft³/ft²/min) and about 6.0961m³/m²/min (20 ft³/ft²/min) (ASTM D-737, under a pressure difference of 12.7mm (½ inch) of water across the membrane).

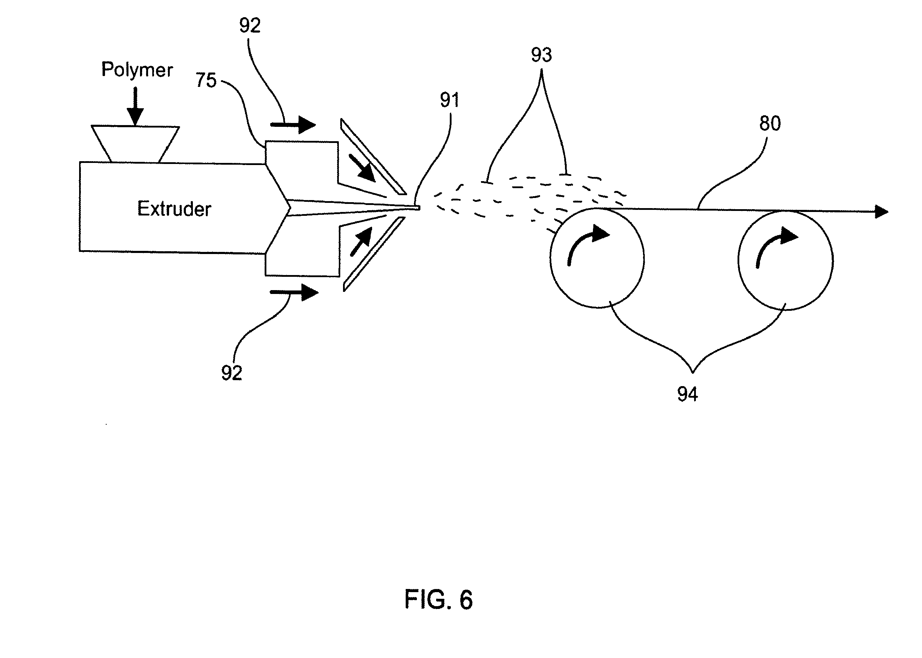

Alternatively or additionally, either or both of the first and/or second barrier layers 26, 46 can include one or more melt blown membrane layers. As shown, for example, in FIG. 6, a melt blown nonwoven membrane 80 can be formed by extruding a molten polymer through a die 90 then attenuating and breaking extruded filaments 91 with hot, high-velocity air 92 to form fibers 93, e.g., having a diameter of between about 500 nanometers and about 2,000 nanometers and a few centimeters in length. The fibers 93 are collected on a moving screen 94 where they bond during cooling. The melt blown membrane 80 can have a permeability of between about 3.048m³/m²/min (10 ft³/ft²/min) and about 21.336m³/m²/min (70 ft³/ft²/min) (tested according to ASTM D-737, under a pressure difference of 12.7mm (½ inch) of water across the first fabric portion).

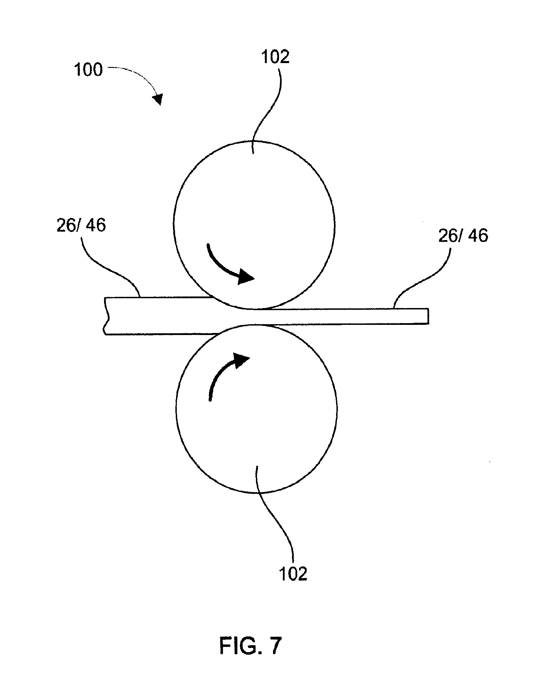

Referring to FIG. 7, prior to lamination with the respective fabric layers, the first and/or second barrier layers 26, 46 can be compressed by calendar 100 (hot roll) and/or an adhesive may be applied to the barrier layer 26, 46 to get a good bond between the very fine fibers, and to control consistency of the barrier layer 26, 46 as well as maintaining its integrity in usage and after washing. As shown in FIG. 7, in calendaring operation, the barrier layer 26, 46 is passed between a pair of heated rolls 102 under pressure.

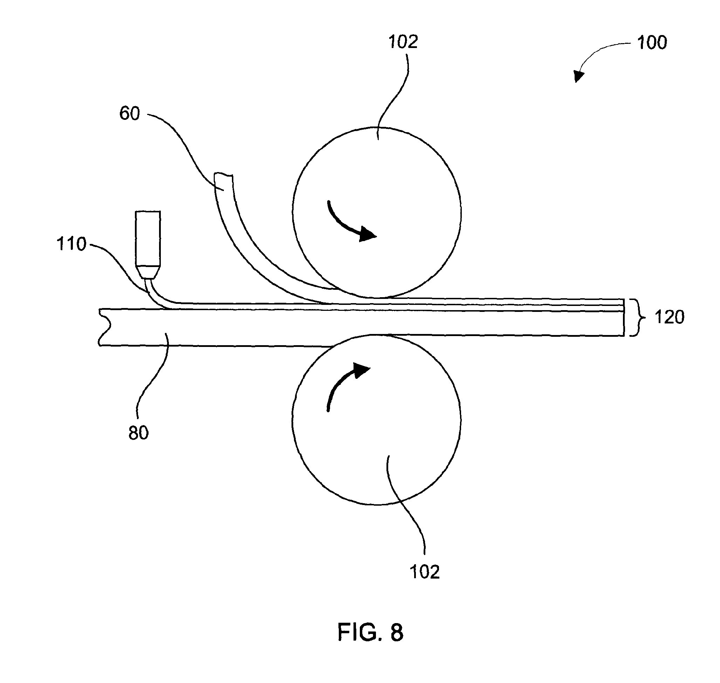

Referring to FIG. 8, in some cases, the first and/or second barrier layer 26, 46 may include two or more membrane layers 60, 80 (e.g., melt blown and/or electrospun membrane layers). For illustrative purposes, one electrospun membrane 60 and one melt blown membrane 80 are shown in FIG. 8. As illustrated in FIG. 8, the membrane layers 120 can be stacked on top of each other and then pressed together under heat and pressure (e.g., calendaring), to provide better integrity bond between the membrane layers 60, 80. To further enhance bond strength between the membrane layers 60, 80 an adhesive 110, e.g., a thermosetting or thermoplastic adhesive, can be applied between the membrane layers 60, 80 prior to calendaring. In this manner, multiple membrane layers 60, 80 can be selectively stacked together in order to provide a single nonwoven membrane 120. The stacking of the individual membrane layers provides for precision control of the air permeability of the nonwoven membrane 120.

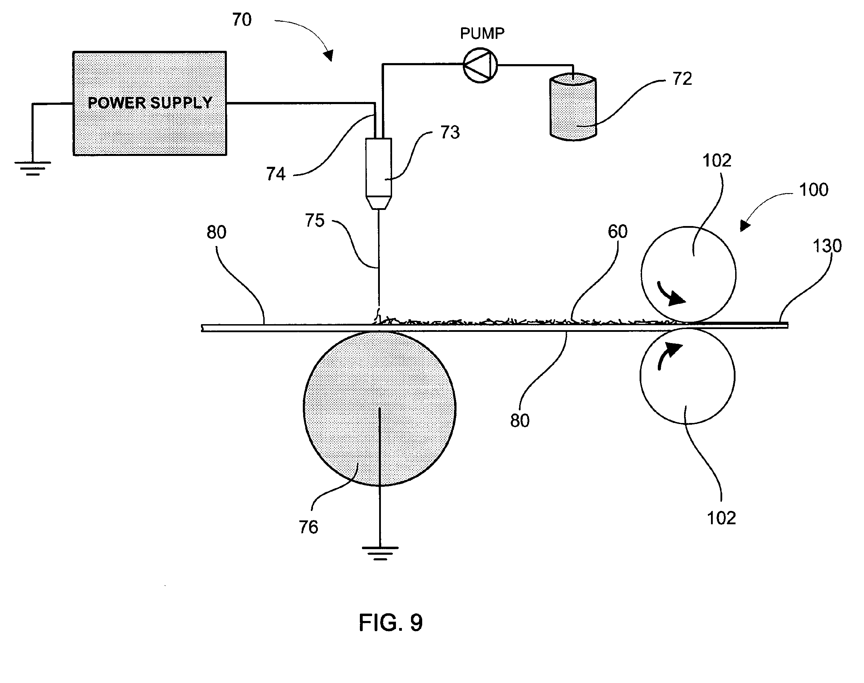

Referring to FIG. 9, in some embodiments, a melt blown nonwoven membrane 80 (e.g., one or more melt blow nonwoven membrane layers) can be used as a carrier on which an electrospun membrane 60 can be deposited as it is produced to form a combined melt blown-electrospun membrane 130. The combined melt blown-electrospun membrane 130 can then compressed by calendar 100.

A number of embodiments have been described. Nevertheless, it will be understood that various modifications may be made without departing from the spirit and scope of the disclosure. For example, in some embodiments, the first barrier layer 26 is formed from a film membrane, e.g., polyurethane or polytetrafluoroethylene (PTFE) film, having very low, e.g., between about 0m³/m²/min (0 ft³/ft²/min) and about 0.6096m³/m²/min (2 ft3/ft2/min), tested according to ASTM D-737 under a pressure difference of 12.7mm (½ inch) of water across the film membrane.

The pattern designs of the first and second fabric portions of the hybrid composite fabric garments are not limited to the particular combinations shown in the figures and described above. Rather, a wide variety of different patterns can be employed in order to achieve the desired results. For example, in other embodiments, the first fabric portion may completely cover the surface of the fabric garment except in high perspiration portions of the body, e.g., under the arms. More extensive coverage by the first fabric portion can provide a hybrid garment which offers enhanced resistance in extremely wet and/or windy environments.

In some embodiments, the inner fabric layers of the first and/or second fabric portions may be finished with raised surfaces in a three-dimensional pattern with raised regions separated by channels, such as grid, box, etc., selected to generate a channeling effect, e.g. as described in U.S. Pat No. 6,927,182, issued August 9, 2005.

Such a pattern formed along the inner fabric layers facilitates maintaining a cushion of air along the wearer's body for added warmth during static physical conditions and enhanced air flow during physical activity, thereby creating a heat dissipating or cooling effect.

In some implementations, the first and/or second fabric portions of the hybrid composite fabric garments may be provided with one-way or two-way stretch, e.g., by incorporation of spandex material in one or more of the outer and/or inner fabric layers.

In some embodiments, the first and/or second nanofiber membrane can have good stretch and recovery properties or very low (e.g., almost none).

In some implementations the hybrid fabric composite garment may include, e.g., formed from, flame retardant fibers or fiber blends. For example, either or both of the first and second fabric portions can include flame retardant fibers or flame retardant fiber blends. The flame retardant fibers can be on both sides (i.e., inner and outer surfaces) of the fabric garment, or just on the outside (i.e., the first and/or second outer fabric layers), or just the inside (i.e., the first and/or second inner layers).

In some cases, the first and/or second outer fabric layer(s) is chemically treated to improve water repellence and/or to enhance abrasion resistance.

Furthermore, although one specific example of a hybrid composite fabric garment in the form of a jacket has been described above, it should be noted that the fabric laminate constructions described herein may also be applied to fabric garments of any of the various types of clothing articles, including, but not limited to, coats, shells, pullovers, vests, shirts, pants, etc.

Accordingly, other embodiments are within the scope of the following claims.

## Claims

1. A hybrid composite fabric garment (10), comprising:
a first fabric portion (20) comprising:
a first inner fabric layer (22);
a first outer fabric layer (24); and
a first barrier layer (26) disposed between the first inner fabric layer and the first outer fabric layer, said first barrier layer comprising a first membrane (60, 80, 120, 130) and having a first predetermined air permeability; and
a second fabric portion (40) comprising:
a second inner fabric layer (42);
a second outer fabric layer (44); and
a second barrier layer (46) disposed between the second inner fabric layer and the second outer fabric layer and comprising a second membrane (60, 80, 120, 130), wherein the second barrier layer has a second predetermined air permeability substantially greater than the first predetermined air permeability **characterised in that** the first and second membranes are nonwoven membranes and wherein at least one of first and second nonwoven membranes comprises an electrospun nanofiber membrane.

2. The hybrid composite fabric garment of claim 1, wherein at least one of:
the electrospun nanofiber membrane is formed of fibers (62) having fiber diameters in the range of between about 50 nanometers and about 1000 nanometers;
at least one of the first and second nonwoven membranes comprises a melt blown membrane (80), optionally the melt blown membrane is formed of fibers (93) having fiber diameters in the range of between about 500 nanometers and about 2,000 nanometers.

3. The hybrid composite fabric garment of claim 1, wherein at least one of the first and second barrier layers comprises multiple nonwoven membrane layers, optionally at least one of the nonwoven membrane layers comprises at least one of a melt blown membrane (80) and an electrospun membrane (60) or the electrospun nanofiber membrane (60).

4. The hybrid composite fabric garment of claim 3, wherein the nonwoven membrane layers comprise:
a melt blown membrane layer having an air permeability of between about 3.048m³/m²/min (10 ft³/ft²/min) and about 21.336m³/m²/min (70 ft³/ft²/min), tested according to ASTM D-737 under a pressure difference of 12.7mm (½ inch) of water across the melt blown membrane layer; and
an electrospun membrane layer connected to the melt blown membrane layer and having an air permeability of between about 0.6096m³/m²/min (2 ft³/ft²/min) and about 6.0961m³/m²/min (20 ft³/ft²/min), tested according to ASTM D-737 under a pressure difference of 12.7mm (½ inch) of water across the electrospun membrane layer.

5. The hybrid composite fabric garment of any preceding claim, wherein at least one of:
the electrospun membrane layer comprises the electrospun nanofiber membrane (60);
the electrospun membrane layer is bonded to the melt blown membrane layer;
the first predetermined air permeability is between about 0m³/m²/min (0 ft³/ft²/min) and about 0.6096m³/m²/min (2 ft³/ft²/min), tested according to ASTM D-737 under a pressure difference of 12.7mm (½ inch) of water across the first barrier layer;
the first fabric portion has a water resistance of between about 6,000 mm of water and about 15,000 mm of water, tested according to AATCC 127-2003 option 2;
the first fabric portion has a moisture vapor transmission rate of between about 2,000 g/m²/24 hrs and about 6,000 g/m²/24 hrs, tested according to ASTM E96 inverted cup;
the second predetermined air permeability is between about 0.9144m³/m²/min (3 ft³/ft²/min) and about 6.0961 m³/m²/min (20 ft³/ft²/min), tested according to ASTM D-737 under a pressure difference of 12.7mm (½ inch) of water across the second barrier layer;
the second barrier layer is bonded to at least one of the second inner fabric layer and the second outer fabric layer with an adhesive (43, 45);
the first barrier layer is bonded to at least one of the first inner fabric layer and the first outer fabric layer with an adhesive (23, 25);
the second fabric portion has a water resistance of between about 500 mm of water and about 4,000 mm of water, tested according to AATCC 127-2003 option 2;
the second fabric portion has a moisture vapor transmission rate of between about 6,000 g/m²/24 hrs and about 12,000 g/m²/24 hrs, tested according to ASTM E96 inverted cup;
the second fabric portion has an air permeability of between about 0.9144m³/m²/min (3 ft³/ft²/min) and about 6.0961m³/m²/min (20 ft³/ft²/min), tested according to ASTM D-737 under a pressure difference of 12.7mm (½ inch) of water across the second fabric portion;
the first fabric portion is configured to cover an upper torso region of a wearer's body and/or at least a wearer's shoulder regions;
the second fabric portion is configured to cover at least a lower torso region of a wearer's body and/or at least a wearer's lower chest region and below.

6. A composite fabric (21, 41), comprising:
an inner fabric layer (22, 42);
an outer fabric layer (24, 44); and
a barrier layer (26) disposed between the inner fabric layer and the outer fabric layer and comprising a nonwoven membrane (60, 80, 120, 130), wherein the nonwoven membrane comprises an electrospun nanofiber membrane (60) and wherein the barrier layer (26) has a predetermined air permeability between about 0m³/m²/min (0 ft³/ft²/min) and about 0.6096m³/m²/min (2 ft³/ft²/min), tested according to ASTM D-737 under a pressure difference of 12.7mm (½ inch) of water across the barrier layer.

7. The composite fabric of claim 6, wherein the barrier layer comprises multiple nonwoven membrane layers, optionally comprising at least one melt blown membrane (80) in addition to the electrospun nanofiber membrane (60).

8. The composite fabric of claim 7, wherein the nonwoven membrane layers comprise:
a melt blown membrane layer having an air permeability of between about 3.048m³/m²/min (10 ft³/ft²/min) and about 21.336m³/m²/min (70 ft³/ft²/min), tested according to ASTM D-737 under a pressure difference of 12.7mm (½ inch) of water across the melt blown membrane layer; and
an electrospun membrane layer connected to the melt blown membrane layer and having an air permeability of between about 0.6096m³/m²/min (2 ft³/ft²/min) and about 6.0961m³/m²/min (20 ft³/ft²/min), tested according to ASTM D-737 under a pressure difference of 12.7mm (½ inch) of water across the electrospun membrane layer, optionally the electrospun membrane layer comprises the electrospun nanofiber membrane (60) and/or is bonded to the melt blown membrane layer.

9. The composite fabric of claim 8, wherein the barrier layer is bonded to at least one of the inner fabric layer and the outer fabric layer with an adhesive (23, 25, 43, 45).

10. The composite fabric of claim 8 or 9, wherein at least one of:
the composite fabric has a water resistance of between about 6,000 mm of water and about 15,000 mm of water, tested according to AATCC 127-2003 option 2;the composite fabric has a moisture vapor transmission rate of between about 2,000 g/m²/24 hrs and about 6,000 g/m²/24 hrs, tested according to ASTM E96 inverted cup; and/or
the composite fabric has a second barrier layer (46) having a predetermined air permeability of between about 0.9144m³/m²/min (3 ft³/ft²/min) and about 6.0961m³/m²/min (20 ft³/ft²/min), tested according to ASTM D-737 under a pressure difference of 12.7mm (½ inch) of water across the barrier layer.

11. The composite fabric of claim 8 or 9, wherein at least one of:
the composite fabric has a water resistance of between about 500 mm of water and about 4,000 mm of water, tested according to AATCC 127-2003 option 2;
the composite fabric has a moisture vapor transmission rate of between about 6,000 g/m²/24 hrs and about 12,000 g/m²/24 hrs, tested according to ASTM E96 inverted cup;
the composite fabric has a second barrier layer (46) having an air permeability of between about 0.9144m³/m²/min (3 ft³/ft²/min) and about 6.0961m³/m²/min (20 ft³/ft²/min), tested according to ASTM D-737 under a pressure difference of 12.7mm (½ inch) of water across the composite fabric.

12. A fabric garment comprising the composite fabric of any of claims 8 to 11.

13. A method of forming a hybrid composite fabric garment (10), the method comprising:
forming a first fabric portion (20) comprising:
disposing a first barrier layer (26) comprising a first nonwoven membrane (60, 80, 120, 130) having a first predetermined air permeability between a first inner fabric layer (22) and a first outer fabric layer (24);
forming a second fabric portion (40) comprising:
disposing a second barrier layer (46) comprising a second nonwoven membrane (60, 80, 120, 130) having a second predetermined air permeability substantially greater than the first predetermined air permeability between a second inner fabric layer (42) and a second outer fabric layer (44); and
joining together the first and second fabric portions to form the hybrid composite fabric garment, wherein at least one of first and second nonwoven membranes comprises an electrospun nanofiber membrane.

14. The method of claim 13, wherein at least one of:
the method further comprises forming at least one of the first and second barrier layers, optionally wherein forming at least one of the first and second barrier layers comprises stacking multiple nonwoven membranes on top of each other, and mechanically processing the stack of nonwoven membranes, optionally by applying pressure to the stack of nonwoven membranes, for example by passing the stack of nonwoven membrane through a plurality of rollers (102) which rollers may be heated;
the method further comprises disposing an adhesive (110) between the multiple nonwoven membranes;
stacking the multiple nonwoven membranes comprises electrospinning a nonwoven membrane onto a carrier nonwoven membrane;
the method further comprises forming the carrier nonwoven membrane using a melt blowing operation.

## Patentansprüche

1. Kleidungsstück aus einem gemischten zusammengesetzten Stoff (10), das aufweist:
einen ersten Stoff-Abschnitt (20), der aufweist:
eine erste innere Stoffschicht (22);
eine erste äußere Stoffschicht (24); und
eine erste Grenzschicht (26), die sich zwischen der ersten inneren Stoffschicht und der ersten äußeren Stoffschicht befindet, wobei die erste Grenzschicht eine erste Membran (60, 80, 120, 130) und eine
erste vorgegebene Luftdurchlässigkeit aufweist; und
einen zweiten Stoff-Abschnitt (40), der aufweist:
eine zweite innere Stoffschicht (42);
eine zweite äußere Stoffschicht (44); und
eine zweite Grenzschicht (46), die sich zwischen der zweiten inneren Stoffschicht und der zweiten äußeren Stoffschicht befindet und eine zweite Membran (60, 80, 120, 130) aufweist, wobei die zweite Grenzschicht eine zweite vorgegebene Luftdurchlässigkeit aufweist, die
wesentlich größer ist, als die erste vorgegebene Luftdurchlässigkeit, **dadurch gekennzeichnet, dass**
die erste und die zweite Membran nicht gewebte Membranen sind, und wobei wenigstens eine der ersten und der zweiten nicht gewebten Membranen eine elektrogesponnene Nanofaser-Membran aufweist.

2. Kleidungsstück aus einem gemischten zusammengesetzten Stoff nach Anspruch 1, mit wenigstens einem von:
die elektrogesponnene Nanofaser-Membran besteht aus Fasern (62) mit Faserdurchmessern im Bereich zwischen ca. 50 Nanometern und ca. 1.000 Nanometern;
wenigstens eine der ersten und zweiten nicht gewebten Membranen weist eine Meltblown-Membran (80) auf, wobei die Meltblown-Membran optional aus (93) mit Faserdurchmessern im Bereich zwischen ca. 500 Nanometern und ca. 2.000 Nanometern ausgebildet ist.

3. Kleidungsstück aus einem gemischten zusammengesetzten Stoff nach Anspruch 1, wobei wenigstens eine der ersten und zweiten Grenzschichten mehrere nicht gewebte Membranschichten aufweist, wobei optional wenigstens eine der nicht gewebten Membranschichten wenigstens eines einer Meltblown-Membran (80) und einer elektrogesponnenen Membran (60) oder die elektrogesponnene Nanofaser-Membran (60) aufweist.

4. Kleidungsstück aus einem gemischten zusammengesetzten Stoff nach Anspruch 3, wobei die nichtgewebten Membranschichten aufweisen:
eine Meltblown-Membranschicht mit einer Luftdurchlässigkeit zwischen ca. 3,048 m³/m²/min (10 ft³/ft²/min) und ca. 21,336 m³/m²/min (70 ft³/ft²/min), getestet gemäß ASTM D-737 bei einer Druckdifferenz von 12,7 mm (1/2 Inch) Wasser über der Meltblown-Membranschicht; und
eine elektrogesponnene Membranschicht, die mit der Meltblown-Membranschicht verbunden ist und eine Luftdurchlässigkeit zwischen ca. 0,6096 m³/m²/min (2 ft³/ft²/min) und ca. 6,0961 m³/m²/min (20 ft³/ft²/min), getestet gemäß ASTM D-737 bei einer Druckdifferenz von 12,7 mm (1/2 Inch) Wasser über der elektrogesponnenen Membranschicht, aufweist.

5. Kleidungsstück aus einem gemischten zusammengesetzten Stoff nach einem der vorhergehenden Ansprüche, mit wenigstens einem von:
die elektrogesponnene Membranschicht weist die elektrogesponnene Nanofaser-Membran (60) auf;
die elektrogesponnene Membranschicht ist an die Meltblown-Membranschicht gebondet;
die erste vorgegebene Luftdurchlässigkeit liegt zwischen ca. 0 m³/m²/min (0 ft³/ft²/min) und ca. 0,6096 m³/m²/min (2 ft³/ft²/min), getestet gemäß ASTM D-737 bei einer Druckdifferenz von 12,7 mm (1/2 Inch) Wasser über der ersten Grenzschicht;
der erste Stoff-Abschnitt hat eine Wasserfestigkeit zwischen ca. 6.000 mm Wasser und ca. 15.000 mm Wasser, getestet gemäß AATCC 127-2003 Option 2;
der erste Stoff-Abschnitt hat eine Wasserdampfdurchlässigkeitsrate zwischen ca. 2.000 g/m²/d und ca. 6.000 g/m²/d, getestet gemäß ASTM E96 "Inverted Cup";
die zweite vorgegebene Luftdurchlässigkeit liegt zwischen ca. 0,9144 m³/m²/min (3 ft³/ft²/min) und ca. 6,0961 m³/m²/min (20 ft³/ft²/min), getestet gemäß ASTM D-737 bei einer Druckdifferenz von 12,7 mm (1/2 Inch) Wasser über der zweiten Grenzschicht;
die zweite Grenzschicht ist an wenigstens eine der zweiten inneren Stoffschicht und der zweiten äußeren Stoffschicht mit einem Kleber (43, 45) gebondet;
die erste Grenzschicht ist an wenigstens eine der ersten inneren Stoffschicht und der ersten äußeren Stoffschicht mit einem Kleber (23, 25) gebondet;
der zweite Stoff-Abschnitt hat eine Wasserfestigkeit zwischen ca. 500 mm Wasser und ca. 4.000 mm Wasser, getestet gemäß AATCC 127-2003 Option 2;
der zweite Stoff-Abschnitt hat eine Wasserdampfdurchlässigkeitsrate zwischen ca. 6.000 g/m²/d und ca. 12.000 g/m²/d, getestet gemäß ASTM E96 "Inverted Cup";
der zweite Stoff-Abschnitt hat eine Luftdurchlässigkeit zwischen ca. 0,9144 m³/m²/min (3 ft³/ft²/min) und ca. 6,0961 m³/m²/min (20 ft³/ft²/min), getestet gemäß ASTM D-737 bei einer Druckdifferenz von 12,7 mm (1/2 Inch) Wasser über dem zweiten Stoff-Abschnitt;
der erste Stoff-Abschnitt ist so konfiguriert, dass er den oberen Rumpfbereich des Körpers eines Trägers und/oder wenigstens die Schulterbereiche eines Trägers bedeckt;
der zweite Stoff-Abschnitt ist so konfiguriert ist, dass er wenigstens den unteren Rumpfbereich des Körpers eines Trägers und/oder wenigstens den unteren Brustbereich und den darunter liegenden Bereich eines Trägers bedeckt.

6. Zusammengesetzter Stoff (21, 41), der aufweist:
eine innere Stoffschicht (22, 42);
eine äußere Stoffschicht (24, 44); und
eine Grenzschicht (26), die sich zwischen der inneren Stoffschicht und der äußeren Stoffschicht befindet und eine nicht gewebte Membran (60, 80, 120, 130) aufweist, wobei die nicht gewebte Membran eine elektrogesponnene Nanofaser-Membran (60) aufweist, und wobei die Grenzschicht (26) eine vorgegebene Luftdurchlässigkeit zwischen ca. 0 m³/m²/min (0 ft³/ft²/min) und ca. 0,6096 m³/m²/min (2 ft³/ft²/min), getestet gemäß ASTM D-737 bei einer Druckdifferenz von 12,7 mm (1/2 Inch) Wasser über der Grenzschicht, hat.

7. Zusammengesetzter Stoff nach Anspruch 6, wobei die Grenzschicht mehrere nicht gewebte Membranschichten aufweist, die optional wenigstens eine Meltblown-Membran (80) zusätzlich zu der elektrogesponnenen Nanofaser-Membran (60) aufweisen.

8. Zusammengesetzter Stoff nach Anspruch 7, wobei die nicht gewebten Membranschichten aufweisen:
eine Meltblown-Membranschicht mit einer Luftdurchlässigkeit zwischen ca. 3,048 m³/m²/min (10 ft³/ft²/min) und ca. 21,336 m³/m²/min (70 ft³/ft²/min), getestet gemäß ASTM D-737 bei einer Druckdifferenz von 12,7 mm (1/2 Inch) Wasser über der Meltblown-Membranschicht; und
eine elektrogesponnene Membranschicht, die mit der Meltblown-Membranschicht verbunden ist und eine Luftdurchlässigkeit zwischen ca. 0,6096 m³/m²/min (2 ft³/ft²/min) und ca. 6,0961 m³/m²/min (20 ft³/ft²/min), getestet gemäß ASTM D-737 bei einer Druckdifferenz von 12,7 mm (1/2 Inch) Wasser über der elektrogesponnenen Membranschicht, aufweist, wobei optional die elektrogesponnene Membranschicht die elektrogesponnene Nanofaser-Membran (60) aufweist und/oder an die Meltblown-Membranschicht gebondet ist.

9. Zusammengesetzter Stoff nach Anspruch 8, wobei die Grenzschicht an wenigstens eine der inneren Stoffschicht und der äußeren Stoffschicht mit einem Kleber (23, 25, 43, 45) gebondet ist.

10. Zusammengesetzter Stoff nach Anspruch 8 oder 9, mit wenigstens einem von:
der zusammengesetzte Stoff hat eine Wasserfestigkeit zwischen ca. 6.000 mm Wasser und ca. 15.000 mm Wasser, getestet gemäß AATCC 127-2003 Option 2;
der zusammengesetzte Stoff hat eine Wasserdampfdurchlässigkeitsrate zwischen ca. 2.000 g/m²/d und ca. 6.000 g/m²/d, getestet gemäß ASTM E96 "Inverted Cup"; und/oder
der zusammengesetzte Stoff hat eine zweite Grenzschicht (46) mit einer vorgegebenen Luftdurchlässigkeit zwischen ca. 0,9144 m³/m²/min (3 ft³/ft²/min) und ca. 6,0961 m³/m²/min (20 ft³/ft²/min), getestet gemäß ASTM D-737 bei einer Druckdifferenz von 12,7 mm (1/2 Inch) Wasser über der Grenzschicht.

11. Zusammengesetzter Stoff nach Anspruch 8 oder 9, mit wenigstens einem von:
der zusammengesetzte Stoff hat eine Wasserfestigkeit zwischen ca. 500 mm Wasser und ca. 4.000 mm Wasser, getestet gemäß AATCC 127-2003 Option 2;
der zusammengesetzte Stoff hat eine Wasserdampfdurchlässigkeitsrate zwischen ca. 6.000 g/m²/d und ca. 12.000 g/m²/d, getestet gemäß ASTM E96 "Inverted Cup";
der zusammengesetzte Stoff hat eine zweite Grenzschicht (46) mit einer Luftdurchlässigkeit zwischen ca. 0,9144 m³/m²/min (3 ft³/ft²/min) und ca. 6,0961 m³/m²/min (20 ft³/ft²/min), getestet gemäß ASTM D-737 bei einer Druckdifferenz von 12,7 mm (1/2 Inch) Wasser über dem zusammengesetzten Stoff.

12. Stoff Kleidungsstück, das den zusammengesetzten Stoff nach einem der Ansprüche 8 bis 11 aufweist.

13. Verfahren zum Herstellen eines Kleidungsstücks aus einem gemischten zusammengesetzten Stoff (10), wobei das Verfahren umfasst:
Herstellen eines ersten Stoff-Abschnitts (20), das umfasst:
Anordnen einer ersten Grenzschicht (26), die eine erste nicht gewebte Membran (60, 80, 120, 130) mit einer ersten vorgegebenen Luftdurchlässigkeit aufweist, zwischen einer ersten inneren Stoffschicht (22) und einer ersten äußeren Stoffschicht (24);
Herstellen eines zweiten Stoff-Abschnitts (40), das umfasst:
Anordnen einer zweiten Grenzschicht (46), die eine zweite nicht gewebte Membran (60, 80, 120, 130) aufweist mit einer zweiten vorgegebenen Luftdurchlässigkeit, die wesentlich größer ist, als die erste vorgegebene Luftdurchlässigkeit, zwischen einer zweiten inneren Stoffschicht (42) und einer zweiten äußeren Stoffschicht (44); und
Zusammenfügen der ersten und zweiten Stoff-Abschnitte, um das Kleidungsstück aus einem gemischten zusammengesetzten Stoff herzustellen, wobei wenigstens eine der ersten und zweiten nicht gewebten Membranen eine elektrogesponnene Nanofaser-Membran aufweist.

14. Verfahren nach Anspruch 13, mit wenigstens einem von:
das Verfahren umfasst des Weiteren das Herstellen wenigstens einer der ersten und zweiten Grenzschichten, wobei optional das Herstellen wenigstens einer der ersten und zweiten Grenzschichten das Aufeinanderstapeln mehrerer nicht gewebter Membranen und das mechanische Verarbeiten des Stapels von nicht gewebten Membranen umfasst, optional durch Aufbringen von Druck auf den Stapel von nicht gewebten Membranen, beispielsweise durch Schicken des Stapels von nicht gewebten Membranen durch eine Vielzahl von Walzen (102), wobei die Walzen beheizt sein können;
das Verfahren umfasst des Weiteren das Aufbringen eines Klebers (110) zwischen den mehreren nicht gewebten Membranen;
das Stapeln der mehreren nicht gewebten Membranen umfasst das Elektrospinnen einer nicht gewebten Membran auf eine nicht gewebte Träger-Membran;
das Verfahren umfasst des Weiteren das Herstellen der nicht gewebten Träger-Membran mittels einer Meltblowing-Operation.

## Revendications

1. Vêtement en tissu composite hybride (10), comprenant :
une première partie en tissu (20) comprenant :
une première couche intérieure de tissu (22) ;
une première couche extérieure de tissu (24) ; et
une première couche barrière (26) disposée entre la première couche intérieure de tissu et la première couche extérieure de tissu, ladite première couche barrière comprenant une première membrane (60, 80, 120, 130) et possédant une première perméabilité à l'air prédéterminée ; et
une seconde partie en tissu (40) comprenant :
une seconde couche intérieure de tissu (42) ;
une seconde couche extérieure de tissu (44) ; et
une seconde couche barrière (46) disposée entre la seconde couche intérieure de tissu et la seconde couche extérieure de tissu et comprenant une seconde membrane (60, 80, 120, 130), dans lequel la seconde couche barrière possède une seconde perméabilité à l'air prédéterminée sensiblement supérieure à la première perméabilité à l'air prédéterminée, **caractérisé en ce que** les première et seconde membranes sont des membranes en non tissé et dans lequel au moins une de première et seconde membranes en non tissé comprend une membrane en nanofibres électrofilées.

2. Vêtement en tissu composite hybride selon la revendication 1, dans lequel :
la membrane en nanofibres électrofilées est formée de fibres (62) possédant des diamètres de fibres dans la plage d'entre environ 50 nanomètres et environ 1000 nanomètres ;
et/ou au moins une des première et seconde membranes en non tissé comprend une membrane obtenue par fusion soufflage (80), facultativement la membrane obtenue par fusion soufflage est formée de fibres (93) possédant des diamètres de fibres dans la plage d'entre environ 500 nanomètres et environ 2000 nanomètres.

3. Vêtement en tissu composite hybride selon la revendication 1, dans lequel au moins une des première et seconde couches barrières comprend de multiples couches de membranes en non-tissé, facultativement au moins une des couches de membranes en non-tissé comprend au moins une d'une membrane obtenue par fusion soufflage (80) et d'une membrane électrofilée (60) ou la membrane en nanofibres électrofilées (60).

4. Vêtement en tissu composite hybride selon la revendication 3, dans lequel les couches de membranes en non-tissé comprennent :
une couche de membrane obtenue par fusion soufflage possédant une perméabilité à l'air d'entre environ 3,048 m³/m²/min (10 ft³/ft²/min) et environ 21,336 m³/m²/min (70 ft³/ft²/min), testée selon l'ASTM D-737 sous une différence de pression de 12,7 mm (1/2 pouce) d'eau à travers la couche de membrane obtenue par fusion soufflage ; et
une couche de membrane électrofilée reliée à la couche de membrane obtenue par fusion soufflage et possédant une perméabilité à l'air d'entre environ 0,6096 m³/m²/min (2 ft³/ft²/min) et environ 6,0961 m³/m²/min (20 ft³/ft²/min), testée selon l'ASTM D-737 sous une différence de pression de 12,7 mm (1/2 pouce) d'eau à travers la couche de membrane électrofilée.

5. Vêtement en tissu composite hybride selon une quelconque revendication précédente, dans lequel il y a au moins l'un des éléments suivants :
la couche de membrane électrofilée comprend la membrane en nanofibres électrofilées (60) ;
la couche de membrane électrofilée est liée à la couche de membrane obtenue par fusion soufflage ;
la première perméabilité à l'air prédéterminée est entre environ 0 m³/m²/min (0 ft³/ft²/min) et environ 0,6096 m³/m²/min (2 ft³/ft²/min), testée selon l'ASTM D-737 sous une différence de pression de 12,7 mm (1/2 pouce) d'eau à travers la première couche barrière ;
la première partie en tissu possède une résistance à l'eau d'entre environ 6000 mm d'eau et environ 15000 mm d'eau, testée selon l'option 2 de l'AATCC 127-2003 ;
la première partie en tissu possède un coefficient de transmission de vapeur d'eau d'entre environ 2000 g/m²/24 h et environ 6000 g/m²/24 h, testée selon la méthode du récipient renversé de l'ASTM E96 ;
la seconde perméabilité à l'air prédéterminée est entre environ 0,9144 m³/m2^{/}min (3 ft³/ft²/min) et environ 6,0961 m³/m²/min (20 ft³/ft²/min), testée selon l'ASTM D-737 sous une différence de pression de 12,7 mm (1/2 pouce) d'eau à travers la seconde couche barrière ;
la seconde couche barrière est liée à au moins une parmi la seconde couche intérieure de tissu et la seconde couche extérieure de tissu avec un adhésif (43, 45) ;
la première couche barrière est liée à au moins une parmi la première couche intérieure de tissu et la première couche extérieure de tissu avec un adhésif (23, 25) ;
la seconde partie en tissu possède une résistance à l'eau d'entre environ 500 mm d'eau et environ 4000 mm d'eau, testée selon l'option 2 de l'AATCC 127-2003 ;
la seconde partie en tissu possède un coefficient de transmission de vapeur d'eau d'entre environ 6000 g/m²/24 h et environ 12000 g/m²/24 h, testée selon la méthode du récipient renversé de l'ASTM E96 ;
la seconde partie en tissu possède une perméabilité à l'air d'entre environ 0,9144 m³/m²/min (3 ft³/ft²/min) et environ 6,0961 m³/m²/min (20 ft³/ft²/min), testée selon l'ASTM D-737 sous une différence de pression de 12,7 mm (1/2 pouce) d'eau à travers la seconde partie en tissu ;
la première partie en tissu est configurée pour recouvrir une région supérieure du torse du corps d'une personne portant le vêtement et/ou au moins les régions des épaules d'une personne portant le vêtement ;
la seconde partie en tissu est configurée pour recouvrir au moins une région inférieure du torse du corps d'une personne portant le vêtement et/ou au moins une région inférieure de la poitrine d'une personne portant le vêtement et en dessous.

6. Tissu composite (21, 41), comprenant :
une couche intérieure de tissu (22, 42) ;
une couche extérieure de tissu (24, 44) ; et
une couche barrière (26) disposée entre la couche intérieure de tissu et la couche extérieure de tissu et comprenant une membrane en non tissé (60, 80, 120, 130), dans lequel la membrane en non tissé comprend une membrane en nanofibres électrofilées (60) et dans lequel la couche barrière (26) possède une perméabilité à l'air prédéterminée entre environ 0 m³/m²/min (0 ft³/ft²/min) et environ 0,6096 m³/m²/min (2 ft³/ft²/min), testée selon l'ASTM D-737 sous une différence de pression de 12,7 mm (1/2 pouce) d'eau à travers la couche barrière.

7. Tissu composite selon la revendication 6, dans lequel la couche barrière comprend de multiples couches de membranes en non-tissé, facultativement comprenant au moins une membrane obtenue par fusion soufflage (80) en plus de la membrane en nanofibres électrofilées (60).

8. Tissu composite selon la revendication 7, dans lequel les couches de membranes en non-tissé comprennent :
une couche de membrane obtenue par fusion soufflage possédant une perméabilité à l'air d'entre environ 3,048 m3/m2/min (10 ft³/ft²/min) et environ 21,336 m³/m²/min (70 ft³/ft²/min), testée selon l'ASTM D-737 sous une différence de pression de 12,7 mm (1/2 pouce) d'eau à travers la couche de membrane obtenue par fusion soufflage ; et
une couche de membrane électrofilée reliée à la couche de membrane obtenue par fusion soufflage et possédant une perméabilité à l'air d'entre environ 0,6096 m³/m²/min (2 ft³/ft²/min) et environ 6,0961 m³/m²/min (20 ft³/ft²/min), testée selon l'ASTM D-737 sous une différence de pression de 12,7 mm (1/2 pouce) d'eau à travers la couche de membrane électrofilée, facultativement la couche de membrane électrofilée comprend la membrane en nanofibres électrofilées (60) et/ou est liée à la couche de membrane obtenue par fusion soufflage.

9. Tissu composite selon la revendication 8, dans lequel la couche barrière est liée à au moins une parmi la couche intérieure de tissu et la couche extérieure de tissu avec un adhésif (23, 25, 43, 45).

10. Tissu composite selon la revendication 8 ou 9, dans lequel :
le tissu composite possède une résistance à l'eau d'entre environ 6000 mm d'eau et
environ 15000 mm d'eau, testée selon l'option 2 de l'AATCC 127-2003 ; le tissu composite possède un coefficient de transmission de vapeur d'eau d'entre environ 2000 g/m²/24 h et environ 6000 g/m²/24 h, testée selon la méthode du récipient renversé de l'ASTM E96 ;
et/ou le tissu composite possède une seconde couche barrière (46) possédant une perméabilité à l'air prédéterminée d'entre environ 0,9144 m³/m²/min (3 ft³/ft²/min) et
environ 6,0961 m³/m²/min (20 ft³/ft²/min), testée selon l'ASTM D-737 sous une différence de pression de 12,7 mm (1/2 pouce) d'eau à travers la couche barrière.

11. Tissu composite selon la revendication 8 ou 9, dans lequel :
le tissu composite possède une résistance à l'eau d'entre environ 500 mm d'eau et
environ 4000 mm d'eau, testée selon l'option 2 de l'AATCC 127-2003 ;
et/ou le tissu composite possède un coefficient de transmission de vapeur d'eau d'entre environ 6000 g/m²/24 h et environ 12000 g/m²/24 h, testée selon la méthode du récipient renversé de l'ASTM E96 ;
et/ou le tissu composite possède une seconde couche barrière (46) possédant une perméabilité à l'air d'entre environ 0,9144 m³/m²/min (3 ft³/ft²/min) et environ 6,0961 m³/m²/min (20 ft³/ft²/min), testée selon l'ASTM D-737 sous une différence de pression de 12,7 mm (1/2 pouce) d'eau à travers le tissu composite.

12. Vêtement en tissu comprenant le tissu composite selon une quelconque des revendications 8 à 11.

13. Procédé de formation d'un vêtement en tissu composite hybride (10), le procédé comprenant :
la formation d'une première partie en tissu (20) comprenant :
la disposition d'une première couche barrière (26) comprenant une première membrane en non-tissé (60, 80, 120, 130) possédant une première perméabilité à l'air prédéterminée entre une première couche intérieure de tissu (22) et une première couche extérieure de tissu (24) ;
la formation d'une seconde partie en tissu (40) comprenant :
la disposition d'une seconde couche barrière (46) comprenant une seconde membrane en non-tissé (60, 80, 120, 130) possédant une seconde perméabilité à l'air prédéterminée sensiblement supérieure à la première perméabilité à l'air prédéterminée entre une seconde couche intérieure de tissu (42) et une seconde couche extérieure de tissu (44) ; et
l'assemblage des première et seconde parties en tissu pour former le vêtement en tissu composite hybride, dans lequel au moins une des première et seconde membranes en non tissé comprend une membrane en nanofibres électrofilées.

14. Procédé selon la revendication 13, dans lequel :
le procédé comprend en outre la formation d'au moins une des première et seconde couches barrières, facultativement dans lequel la formation d'au moins une des première et seconde couches barrières comprend l'empilage de multiples membranes en non tissé les unes par-dessus les autres, et le traitement mécanique de la pile de membranes en non tissé, facultativement en appliquant une pression sur la pile de membranes en non tissé, par exemple en faisant passer la pile de membranes en non-tissé à travers une pluralité de rouleaux (102), lesquels rouleaux peuvent chauffés ;
et/ou le procédé comprend en outre la disposition d'un adhésif (110) entre les multiples membranes en non tissé ;
et/ou l'empilage des multiples membranes en non tissé comprend l'électrofilage d'une membrane en non tissé sur une membrane support en non-tissé ;
et/ou le procédé comprend en outre la formation de la membrane support en non-tissé en utilisant une opération de fusion soufflage.
